# EUROPÄISCHE PATENTSCHRIFT

(11) **EP 2 076 947 B1**
(45) Veröffentlichungstag und Bekanntmachung des Hinweises auf die Patenterteilung: **14.09.2011**
(21) Anmeldenummer: 07818228.4
(22) Anmeldetag: 18.09.2007
(51) Int. Cl.: H01T 4/06, H02H 9/06

(54) **ÜBERSPANNUNGSSCHUTZGERÄT**
OVERVOLTAGE PROTECTION DEVICE
APPAREIL DE PROTECTION CONTRE LES SURTENSIONS

(30) Priorität: 18.09.2006 DE 102006044344
(43) Veröffentlichungstag der Anmeldung: 08.07.2009
(73) Patentinhaber: PHOENIX CONTACT GmbH & Co. KG, 32825 Blomberg (DE)
(72) Erfinder: WOLFF, Gerhard, 32699 Extertal (DE); FRITZEMEIER, Bernd, 32760 Detmold (DE); SANDAU, Martin, 32756 Detmold (DE); WAGENER, Carsten, 37649 Heinsen (DE)
(74) Vertreter: Gesthuysen, Michael
(86) Internationale Anmeldenummer: PCT/EP2007/008126
(87) Internationale Veröffentlichungsnummer: WO 2008/034589

(56) Entgegenhaltungen:
- EP-A- 1 137 144
- DE-A1- 19 843 130
- FR-A- 2 490 411

## Beschreibung

Die Erfindung betrifft ein Überspannungsschutzgerät insbesondere zum Schutz von elektrischen Niederspannungsinstallationen, bestehend aus einem Geräteunterteil und aus mindestens einem auf das Geräteunterteil aufsteckbaren Geräteoberteil, wobei das Geräteunterteil Eingangs- und Ausgangsklemmen für elektrische Leiter und mit den Eingangs- und Ausgangsklemmen verbundene, insbesondere als Steckerbuchsen ausgebildete, Kontaktelemente aufweist, und wobei das Geräteoberteil zu den Kontaktelementen korrespondierende, insbesondere als Steckerstifte ausgebildete, Gegenkontaktelemente und mindestens ein zwischen zwei Gegenkontaktelemente geschaltetes Schutzelement, insbesondere einem Varistor, aufweist.

Die Leitungen der Meß-, Steuer-, und Regeltechnik bilden die Nervenbahnen von Industrieanlagen. Die an ihnen angeschlossenen elektronischen Meß-, Steuer-, und Regel- und Schaltkreise sind empfindlich gegen transiente Überspannungen, wie sie insbesondere durch atmosphärische Entladungen, aber auch durch Schalthandlungen, Netzbeeinflussung durch induktive Lasten oder durch Kurzschlüsse in Energieversorgungsnetzen auftreten können. Diese durch Kurzschlüsse in Energieversorgungsnetzen auftreten können. Diese Empfindlichkeit hat in dem Maße zugenommen, in dem elektronische Bauelemente, insbesondere Transistoren und Thyristoren, verwendet werden; vor allem sind zunehmend eingesetzte integrierte Schaltkreise in starkem Maße durch transiente Überspannungen gefährdet.

Elektrische Stromkreise arbeiten mit der für sie spezifizierten Spannung, der Nennspannung, normalerweise störungsfrei. Das gilt dann nicht, wenn Überspannungen auftreten. Als Überspannungen gelten alle Spannungen, die oberhalb der oberen Toleranzgrenze der Nennspannung liegen. Hierzu zählen vor allem auch die transienten Überspannungen, die aufgrund von atmosphärischen Entladungen, aber auch durch Schalthandlungen oder Kurzschlüsse in Energieversorgungsnetzen auftreten können und galvanisch, induktiv oder kapazitiv in elektrische Stromkreise eingekoppelt werden können. Um nun elektrische oder elektronische Stromkreise, insbesondere elektronische Meß-, Steuer-, Regel- und Schaltkreise, wo auch immer sie eingesetzt sind, gegen transiente Überspannungen zu schützen, sind Überspannungsschutzelemente entwickelt worden und seit mehr als zwanzig Jahren bekannt, die Überspannungsspitzen abfangen bzw. begrenzen.

Die erforderlichen Maßnahmen zum Schutz der Stromversorgung von Anlagen und Geräten gliedern sich je nach Ableiterauswahl und den zu erwartenden Umwelteinflüssen in verschiedene Stufen. Die Überspannungsschutzgeräte für die einzelnen Stufen unterscheiden sich dabei grundsätzlich durch die Höhe des Ableitvermögens und den Schutzpegel.

Die erste Schutzstufe (Typ 1) wird dabei in der Regel von einem Blitzstromableiter gebildet, der als leistungsstärkstes Schutzgerät in der zentralen Stromversorgung eines Gebäudes installiert wird. Wesentlicher Bestandteil eines derartigen Blitzstromableiters ist eine Funkenstrecke mit mindestens zwei Elektroden, wobei beim Zünden der Funkenstrecke zwischen den beiden Elektroden ein Lichtbogen entsteht.

Die zweite Schutzstufe (Typ 2) bildet in der Regel ein Überspannungsableiter auf Varistorbasis. Diese Schutzstufe begrenzt nochmals die verbleibende Restspannung über dem Blitzstromableiter. Je nach Gefährdungspotential der zu schützenden Anlage, bzw. des zu schützenden Gebäudes, kann es im Einzelfall ausreichen, wenn mit der zweiten Schutzstufe, d. h. dem Überspannungsableiter, begonnen wird.

Die dritte Schutzstufe (Typ 3) wird als Geräteschutz bezeichnet und in der Regel unmittelbar vor dem zu schützenden Gerät installiert. Mit dem Geräteschutz wird eine Restspannung erreicht, die für das angeschlossene Gerät gefahrlos ist. Derartige Überspannungsschutzgeräte gibt es in verschiedenen Bauformen, beispielsweise als Steckdose, Doseneinbaumodul oder als Schaltschrankmodul.

Die vorliegende Erfindung wird insbesondere bei Überspannungsschutzgeräte angewandt, die dem Geräteschutz dienen und als Schaltschrankmodul ausgebildeten sind. Die Erfindung ist jedoch hierauf nicht beschränkt und kann grundsätzlich auch bei Überspannungsschutzgeräte des Typs 1 oder des Typs 2 realisiert werden oder in der Steuerungstechnik.

Aus Gründen der Modularität, der Flexibilität sowie zur Erleichterung von Reparaturarbeiten werden Schaltschrankmodule häufig mehrteilig ausgebildet, wobei sie dann aus einem fest installierten Basiselement als Geräteunterteil und mindestens einem austauschbaren Schutzstecker als Geräteoberteil bestehen. Das Basiselement dient dabei zur Befestigung des Überspannungsschutzgeräts auf einer Tragschiene sowie zum Anschluß der einzelnen elektrischen Leiter, wozu das Basiselement entsprechende Eingangs- und Ausgangsklemmen aufweist, die in beliebiger Anschlußtechnologie - beispielsweise Schraubklemmen, Zugfederklemmen, Direktsteckklemmen oder Schnellanschlußklemmen - ausgeführt sein können. Je nach Ausführungsvariante kann ein derartiges Überspannungsschutzgerät als Zweileiter-, Dreileiter- oder Vierleiterschutz ausgebildet sein. Der Schutzstecker weist die eigentliche Überspannungsschutzschaltung mit dem bzw. den an den jeweiligen Anwendungsfall angepaßten Schutzelementen auf. Prinzipiell können auch zwei oder mehrere Schutzstecker auf ein Basiselement aufgesteckt werden.

Ein Überspannungsschutzgerät, von dem die Erfindung ausgeht, ist grundsätzlich bereits in der DE 33 46 753 C2 beschrieben. Darüber hinaus werden derartige Überspannungsschutzgeräte seit vielen Jahren von der Anmelderin unter dem Produktnamen "PLUGTRAB" vertrieben (vgl. Phoenix Contact Prospekt "Überspannungsschutz TRABTECH 2005, Seiten 48 bis 61). Ein wesentliches Merkmal dieser Überspannungsschutzgeräte besteht dabei in der Möglichkeit, die einzelnen Schutzstecker unterbrechungsfreien und impedanzneutralen stecken und ziehen zu können. Hierzu sind im Geräteunterteil in den zwischen einander zugeordneten Eingangs- und Ausgangsklemmen durchgehend verlaufenden Leitungspfaden Ansprechimpedanzen angeordnet. Da das Basiselement auch beim Austausch des Schutzsteckers in der Durchgangsverdrahtung installiert bleibt, ist somit ein unterbrechungsfreies und impedanzneutrales Ziehen des Schutzsteckers zu Prüf- und Austauschzwecken möglich.

Zur einfachen mechanischen und elektrischen Kontaktierung des Geräteunterteils mit dem jeweiligen Geräteoberteil weist das Geräteunterteil mit den Anschlußklemmen verbundene Steckerbuchsen und das Geräteoberteil korrespondierende Steckerstifte auf, so daß das Geräteoberteil werkzeuglos auf das Geräteunterteil aufsteckbar ist. Zusätzlich weist das bekannte Überspannungsschutzgerät noch einen Wechslerkontakt als Signalgeber zur Fernmeldung des Zustandes mindestens eines Schutzelements auf, wodurch eine komfortable Fernüberwachung möglich ist. Darüber hinaus ist es beispielsweise aus der DE 20 2004 006 227 U1 bekannt, daß das Geräteoberteil eine optische Zustandsanzeige aufweist, die mechanisch betätigbar ist. Dadurch kann der Zustand des Überspannungsschutzgeräts auch direkt am Gerät einfach abgelesen werden.

Die DE 198 43 130 A1 offenbart ein Überspannungsschutzgerät bestehend aus einem Geräteunterteil und einem Geräteoberteil, wobei in einer Kammer im Geräteunterteil Klemmschrauben als Anschlussklemmen angeordnet sind. In dem Geräteoberteil ist ein als Varistor ausgebildetes Schutzelement angeordnet. Außerdem hinaus weist das Geräteunterteil Kontaktelemente auf, in die die Kontaktzungen des Geräteoberteils eingesteckt werden können. Darüber hinaus weißt der aus der DE 198 43 130 A1 bekannte Überspannungsableiter noch eine Defektanzeige auf, die zusammen mit einer zugehörigen Auswerteelektronik getrennt vom Einsteckelement im Gehäuseunterteil angeordnet ist. Dadurch soll die Aufgabe gelöst werden, einen Überspannungsableiter zur Verfügung zu stellen, bei dem nach einem Defekt des im Einsteckelement angeordneten Varistors die noch funktionsfähige Defektanzeige nicht ausgetauscht werden muß.

Bei bestimmten Anwendungen, wie beispielsweise in der Eisenbahnsignaltechnik, besteht die sicherheitstechnische Anforderung, daß gravierende Fehler im Leitungs- und Funktionssystem möglichst umgehend nach ihrem Auftreten in systemgerechter Weise offenbart werden. Eine Fehlermeldung über einen separaten Fernmeldekontakt ist dabei ebensowenig ausreichend wie eine optische Zustandsanzeige unmittelbar am Überspannungsschutzgerät.

Der vorliegenden Erfindung liegt daher die Aufgabe zugrunde, das eingangs beschriebene Überspannungsschutzgerät derart abzuändern, daß unzulässige Betriebszustände des Überspannungsschutzgeräts direkt über systemeigene Mechanismen des geschützten Leitungssystems erkennbar sind.

Diese Aufgabe ist bei dem eingangs beschriebenen Überspannungsschutzgerät zunächst und im wesentlichen dadurch gelöst, daß mindestens ein Leitungspfad zwischen zwei einander zugeordneten Eingangs- und Ausgangsklemmen über das Geräteoberteil läuft, so daß bei nicht gestecktem Geräteoberteil der Leitungspfad unterbrochen ist, wodurch eine manuelle Trennmöglichkeit des Signalflusses über den Leitungspfad möglich ist, und daß in mindestens einem Leitungspfad im Geräteoberteil mindestens ein den Betriebszustand eines Schutzelements überwachendes Abtrennelement so angeordnet ist, daß bei Auslösen des Abtrennelements aufgrund eines unzulässigen Betriebszustandes des Schutzelements der entsprechende Leitungspfad auch bei gestecktem Geräteoberteil unterbrochen ist.

Der vorliegenden Erfindung liegt somit eine Abkehr von dem seit Jahren praktizierten Grundgedanken zugrunde, daß das Ziehen und Stecken des Geräteoberteils unterbrechungsfrei und impedanzneutral zu erfolgen hat. In Abkehr der Lehre der DE 33 46 753 C2 und der Praxis ist das Geräteunterteil bei dem erfindungsgemäßen Überspannungsschutzgerät bewußt so verschaltet, daß mindestens ein Leitungspfad bei nicht gestecktem Geräteoberteil unterbrochen ist. Auf den wartungstechnischen Vorteil des unterbrechungsfreien und impedanzneutralen Ziehens und Steckens des Geräteoberteils wird somit bewußt verzichtet.

Darüber hinaus wird dadurch, daß in mindestens einem Leitungspfad im Geräteoberteil ein Abtrennelement angeordnet ist, eine im Signalfluß liegende Öffnerfunktion zur Simulierung eines Drahtbruches realisiert. Da das im Normalbetrieb durchgehend geschlossene Abtrennelement durch das Auftreten eines unzulässigen Betriebszustandes des Schutzelements ausgelöst wird, wird dieser Fehlerfall des Schutzelements durch das gewollte Auftrennen des Leitungspfades unmittelbar und direkt über das geschützte Leitungssystem übertragen, so daß es von systemeigene Mechanismen angezeigt bzw. ausgewertet werden kann.

Dadurch, daß mindestens ein Leitungspfad - zwingend - über das Geräteoberteil geführt ist, ist außerdem auf einfache Art und Weise eine manuelle Trennmöglichkeit des Signalflusses über den Leitungspfad möglich, da hierzu lediglich das Geräteoberteil von dem Geräteunterteil abgezogen werden muß.

Gemäß einer bevorzugten Ausgestaltung des erfindungsgemäßen Überspannungsschutzgeräts sind alle Leitungspfade zwischen zwei einander zugeordneten Eingangs- und Ausgangsklemmen über das Geräteoberteil geführt, wobei in jedem Leitungspfad im Geräteoberteil mindestens ein Abtrennelement angeordnet ist. Hierdurch ist eine Überwachung sämtlicher den Leitungspfaden zugeordneter Schutzelemente möglich. Das Auftreten eines unzulässigen Betriebszustandes eines Schutzelements kann gemäß einer Alternative nur zum Auslösen des zugeordneten Abtrennelements führen, so daß auch nur der betroffene Leitungspfad unterbrochen wird. Gemäß einer anderen Alternative können die einzelnen Abtrennelemente so zueinander angeordnet bzw. miteinander verschaltet sein, daß mehrere - oder alle - Abtrennelemente ausgelöst und damit mehrere - oder alle - Leitungspfade aufgetrennt werden, auch wenn nur bei einem Schutzelement ein unzulässiger Betriebszustand aufgetreten ist.

Gemäß einer weiteren vorteilhaften Ausgestaltung der Erfindung sind in einem Leitungspfad mindestens zwei Abtrennelemente in Reihe zueinander angeordnet. Die Anordnung der beiden Abtrennelemente erfolgt dabei derart, daß je ein Abtrennelement auf einer Seite des Ableitpfades angeordnet ist, in dem das Schutzelement angeordnet ist. Hierdurch ist im Fehlerfall eine sichere Unterbrechung des Leitungspfades auch dann möglich, wenn die Energieflußrichtung im Leitungspfad bidirektional erfolgt. Bezüglich der Anordnung der einzelnen Abtrennelemente wird ergänzend auf die DE 197 51 482 C2 verwiesen.

Die einzelnen Abtrennelemente sind vorzugsweise als mit den zugeordneten Schutzelementen thermisch gekoppelte Temperatursicherungen ausgebildet. Dies hat den Vorteil, daß bei als Varistoren ausgebildeten Schutzelementen nicht nur eine beim bestimmungsgemäßen Ableiten auftretende Erwärmung des Schutzelements sondern auch eine aufgrund von Alterungsprozessen auftretende schleichende Erwärmung aufgrund eines dauerhaften Leckstroms oder einer Überlast detektiert werden kann.

Wie grundsätzlich bereits aus dem Stand der Technik bekannt ist, ist auch bei dem erfindungsgemäßen Überspannungsschutzgerät zwischen dem Geräteunterteil und dem Geräteoberteil bzw. den Geräteoberteilen eine Codierung ausgebildet, so daß Fehlinstallationen, beispielsweise bei Schutzsteckern unterschiedlicher Spannungsebenen, ausgeschlossen sind. Die Codierung kann dabei vorzugsweise "selbst codierend" ausgebildet sein, so daß beim erstmaligen Aufstecken eines Geräteoberteils das Geräteunterteil auf den entsprechenden Typ des Geräteoberteils codiert wird. Zusätzlich kann das Geräteunterteil oder das Geräteoberteil eine Anzeige aufweisen, die den richtigen Einbauzustand des Geräteoberteils im Geräteunterteil signalisiert. Bei der Anzeige kann es sich dabei insbesondere um eine optische oder eine mechanische Anzeige handeln.

Zusätzlich kann auch bei dem erfindungsgemäßen Überspannungsschutzgerät das Geräteoberteil eine Anzeige aufweisen, die den Betriebszustand des Schutzelements bzw. der Schutzelemente signalisiert. Außerdem kann das Überspannungsschutzgerät auch einen zusätzlichen Fernmeldekontakt aufweisen, so daß eine zusätzliche Fernüberwachung möglich ist.

Weist das Geräteunterteil eine Erdungsklemme zum Anschluß eines Erdleiters auf, so kann die Erdungsklemme entweder direkt über einen im Geräteunterteil angeordneten metallischen Montagefuß oder indirekt, beispielsweise über einen Gasableiter, an den Montagefuß angebunden sein, wobei der Montagefuß vorzugsweise unmittelbar beim Aufsetzen des Geräteunterteils auf eine Tragschiene die elektrische Verbindung mit der das Erdpotential führenden Tragschiene herstellt.

Im einzelnen gibt es nun eine Vielzahl von Möglichkeiten, das erfindungsgemäße Überspannungsschutzgerät auszugestalten und weiterzubilden. Hierzu wird verwiesen sowohl auf die dem Patentanspruch 1 nachgeordneten Patentansprüche, als auch auf die nachfolgende Beschreibung bevorzugter Ausfiihrungsbeispiele in Verbindung mit den Zeichnungen. In den Zeichnungen zeigen
- Fig. 1: eine mögliche Gehäuseform eines zweiteiligen Überspannungs- schutzgeräts,
- Fig. 2: in schematischer Darstellung die Schaltungsanordnung zweier Varianten eines erfindungsgemäßen Überspannungsschutzgeräts,
- Fig. 3: die schematische Schaltungsanordnung eines dritten Ausfüh- rungsbeispiels des Überspannungsschutzgeräts,
- Fig. 4: die schematische Schaltungsanordnung einer vierten Variante des Überspannungsschutzgeräts, und
- Fig. 5: die schematische Darstellung einer Schaltungsanordnung eines weiteren Ausführungsbeispiels eines Überspannungsschutzge- räts.

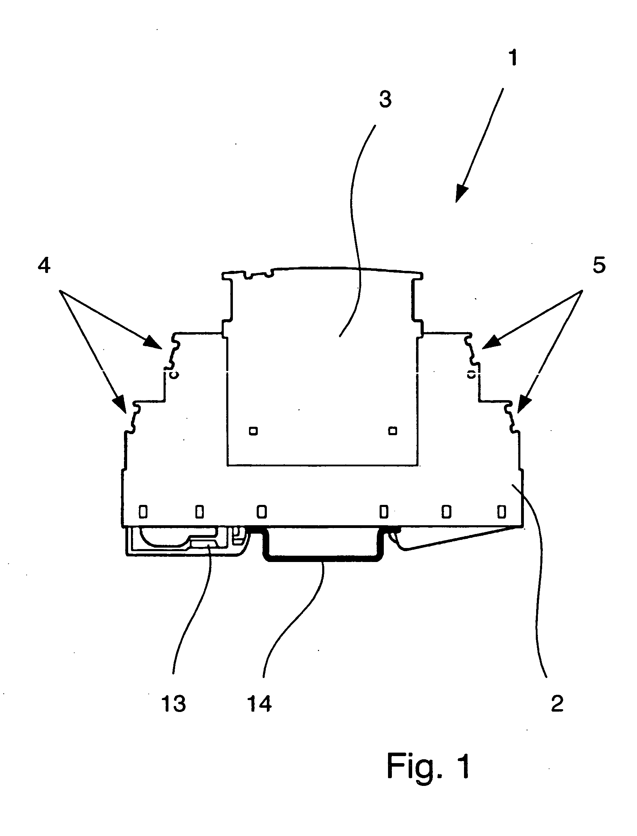

Fig. 1 zeigt eine Darstellung eines Überspannungsschutzgeräts 1, welches als Schaltschrankenmodul ausgebildet ist und ein Geräteunterteil 2 sowie ein auf das Geräteunterteil 2 aufsteckbares Geräteoberteil 3 aufweist. Das Geräteunterteil weist an seinen beiden Stirnseiten Eingangsklemmen 4 und Ausgangsklemmen 5 auf, die vorzugsweise als Schraubklemmen oder als Zugfederklemmen ausgebildet und in zwei Reihen versetzt übereinander angeordnet sind. Zum einfachen Aufstecken des Geräteoberteils 3 auf das Geräteoberteil 2 sind in dem Geräteunterteil 2 Steckerbuchsen und in dem Geräteoberteil 3 korrespondierende Steckerstifte ausgebildet, wobei die Steckerbuchsen mit den Eingangs- und Ausgangsklemmen 4, 5 und die Steckerstifte mit in dem Geräteoberteil 3 angeordneten Schutzelementen 6 elektrisch leitend verbunden sind.

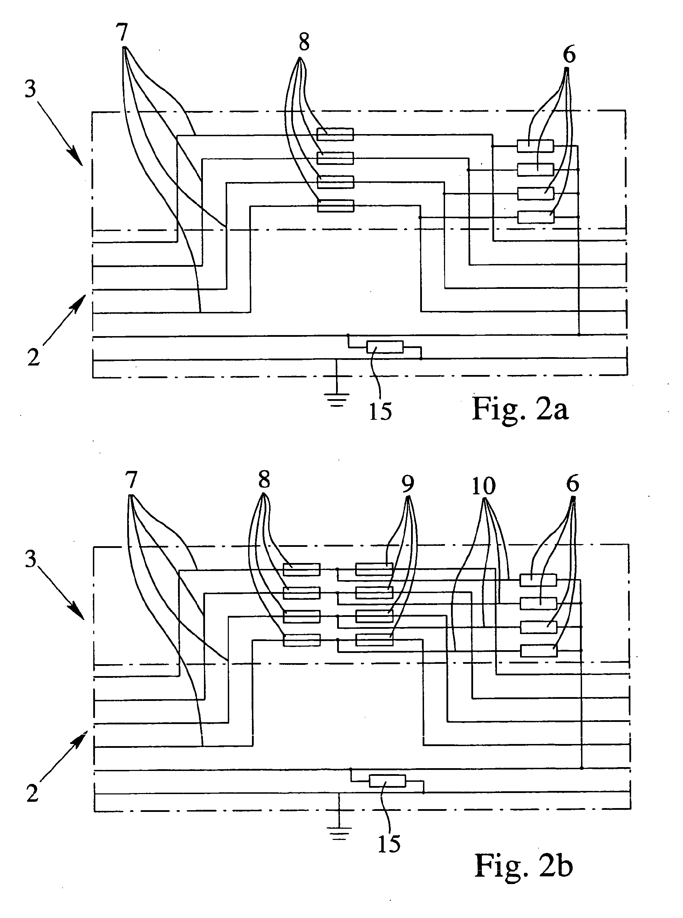

Die Fig. 2 bis 5 zeigen den schaltungstechnischen Aufbau des in Fig. 1 dargestellten zweiteiligen Überspannungsschutzgeräts 1 schematisch. Dabei ist die Zweiteilung zwischen dem Geräteunterteil 2 und dem Geräteoberteil 3 lediglich durch eine gestrichelte Linie angedeutet.

Allen Ausführungsbeispielen ist dabei gemeinsam, daß die Leitungspfade 7 zwischen zwei einander zugeordneten Eingangs- und Ausgangsklemmen 4, 5 über das Geräteoberteil 3 verlaufen, so daß bei nicht gestecktem Geräteoberteil 3 die Leitungspfade 7 unterbrochen sind. Allen Ausführungsbeispielen ist außerdem gemeinsam, daß in jedem Leitungspfad 7 mindestens ein Abtrennelement 8 angeordnet ist, wobei bei dem Ausführungsbeispiel gemäß Fig. 2a jeder Leitungspfad 7 genau ein Abtrennelement 8 aufweist, während bei den übrigen Ausführungsbeispielen in jedem Leitungspfad 7 jeweils zwei Abtrennelemente 8, 9 angeordnet sind.

Die beiden Abtrennelemente 8, 9 sind dabei jeweils auf einer Seite des das Schutzelement 6 aufweisenden Ableitpfades 10 angeordnet, so daß im Fehlerfalle eine sichere Abtrennung des vorzugsweise als Varistor ausgebildeten Schutzelements 6 auch dann gewährleistet ist, wenn die Energieflußrichtung im Leitungspfad 7 bidirektional erfolgt.

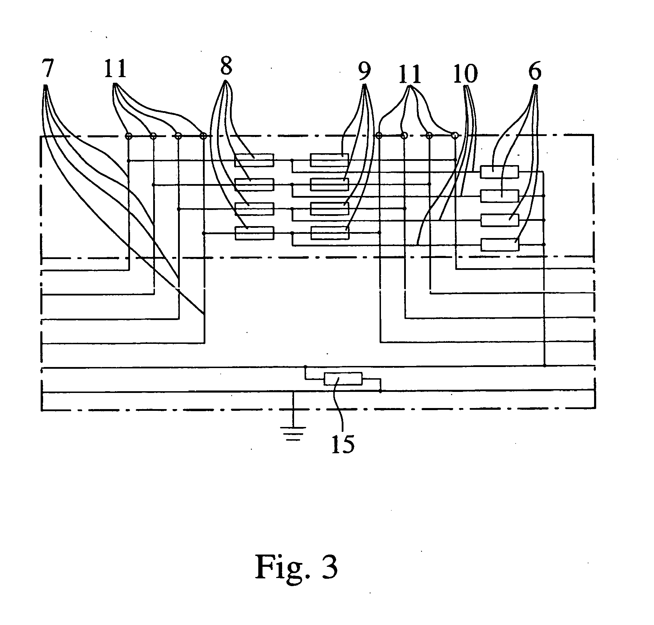

Bei dem Ausführungsbeispiel des Überspannungsschutzgeräts 1 gemäß Fig. 3 sind beidseits der Abtrennelemente 8, 9 als Prüfbuchsen ausgebildete Prüfabgriffe 11 vorgesehen, wobei die Prüfabgriffe 11 an der Oberseite des Geräteoberteils 3 angeordnet sind, so daß sie im eingebauten Zustand des Geräteoberteils 3 einfach zugänglich sind.

Bei den Ausführungsbeispielen gemäß den Fig. 2 und 3 weist das Geräteoberteil 3 die Funktion einer manuell zu betätigenden Trennstelle für die einzelnen Leitungspfade 7 auf. Dadurch, daß die einzelnen Leitungspfade 7 über das Geräteoberteil 3 geführt werden, erfolgt beim Ziehen des Geräteoberteils 3 automatisch eine Trennung der einzelnen Leitungspfade 7 und damit der elektrischen Verbindung zwischen den einander zugeordneten Eingangs- und Ausgangsklemmen 4, 5.

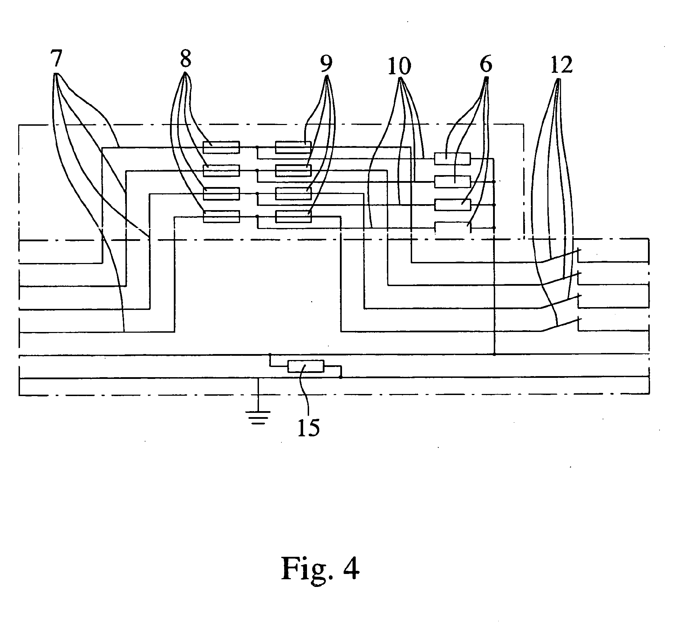

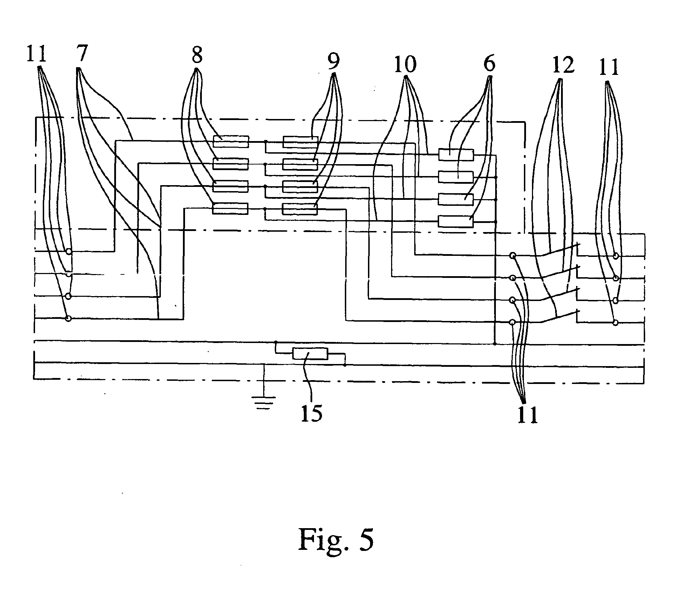

Bei den in den Fig. 4 und 5 dargestellten Schaltungsanordnungen des erfindungsgemäßen Überspannungsgeräts 1 sind darüber hinaus noch zusätzliche Trennstellen 12 am Geräteunterteil 2 vorgesehen. Die vorzugsweise als Messertrennstelle ausgebildeten Trennstellen 12 können entweder einzeln für jeden Leitungspfad 7 oder gemeinsam für mehrere Leitungspfade 7 betätigt werden.

Bei der Schaltungsanordnung gemäß Fig. 5 sind im Geräteunterteil 2 neben den Trennstellen 12 noch zusätzlich mehrere Prüfabgriffe 11 vorgesehen. Bei dem hier dargestellten Ausführungsbeispiel sind die Prüfabgriffe 11 sowohl beidseitig der manuell bedienbaren Trennstelle 12 als auch beidseitig des Geräteoberteils 3 angeordnet. Selbstverständlich können dabei die Prüfabgriffe 11 und die Trennstellen 12 auch miteinander kombiniert ausgebildet sein, so daß bei Einstecken eines Trennmessers in eine Prüfstelle die Funktion einer Trennstelle realisiert wird.

Aus der Darstellung des Überspannungsschutzgeräts 1 gemäß Fig. 1 ist erkennbar, daß das Geräteunterteil 3 einen Montagefuß 13 zur Befestigung des Überspannungsschutzgeräts 1 auf einer Tragschiene 14 aufweist. Weist das Überspannungsschutzgerät 1 gemäß den Fig. 2 bis 5 Erdungsklemmen auf, so können die entsprechenden Anschlüsse entweder direkt oder über einen Gasableiter 15 mit dem dann metallischen Montagefuß 13 verbunden werden, der die elektrische Verbindung zu der geerdeten Tragschiene 14 herstellt. Auch ohne das Erdungsklemmen vorhanden sind kann das Bezugspotential des Überspannungsschutzgeräts 1 über den Montagefuß 13 mit der geerdeten Tragschiene 14 verbunden werden.

## Patentansprüche

1. Überspannungsschutzgerät zum Schutz von elektrischen Niederspannungsinstallationen, bestehend aus einem Geräteunterteil (2) und aus mindestens einem auf das Geräteunterteil (2) aufsteckbaren Geräteoberteil (3),
wobei das Geräteunterteil (2) Eingangs- und Ausgangsklemmen (4, 5) für elektrische Leiter und mit den Eingangs- und Ausgangsklemmen (4, 5) verbundene, insbesondere als Steckerbuchsen ausgebildete, Kontaktelemente aufweist,
wobei das Geräteoberteil (3) zu den Kontaktelementen korrespondierende, insbesondere als Steckerstifte ausgebildete, Gegenkontaktelemente und mindestens ein zwischen zwei Gegenkontaktelemente geschaltetes Schutzelement (6), insbesondere einen Varistor, aufweist,
**dadurch gekennzeichnet,**
**daß** mindestens ein Leitungspfad (7) zwischen zwei einander zugeordneten Eingangs- und Ausgangsklemmen (4, 5) über das Geräteoberteil (3) läuft, so daß bei nicht gestecktem Geräteoberteil (3) der Leitungspfad (7) unterbrochen ist, wodurch eine manuelle Trennmöglichkeit des Signalflußes über den Leitungspfad möglich ist, und
**daß** in mindestens einem Leitungspfad (7) im Geräteoberteil (3) mindestens ein den Betriebszustand eines Schutzelements (6) überwachendes Abtrennelement (8) so angeordnet ist, daß bei Auslösen des Abtrennelements (8) aufgrund eines unzulässigen Betriebszustandes des Schutzelements (6) der entsprechende Leitungspfad (7) auch bei gestecktem Geräteoberteil (3) unterbrochen ist.

2. Überspannungsschutzgerät nach Anspruch 1, **dadurch gekennzeichnet, daß** alle Leitungspfade (7) zwischen zwei einander zugeordneten Eingangs- und Ausgangsklemmen (5, 6) über das Geräteoberteil (3) laufen, und daß in jedem Leitungspfad (7) im Geräteoberteil (3) jeweils mindestens ein Abtrennelement (8) angeordnet ist.

3. Überspannungsschutzgerät nach Anspruch 1 oder 2, **dadurch gekennzeichnet, daß** im Geräteoberteil (3) zwischen mindestens zwei Gegenkontaktelementen zwei oder mehr Abtrennelemente (8, 9) derart in Reihe zueinander angeordnet sind, daß je mindestens ein Abtrennelement (8, 9) auf einer Seite des das Schutzelement (6) aufweisenden Ableitpfades (10) ist.

4. Überspannungsschutzgerät nach einem der Ansprüche 1 bis 3, **dadurch gekennzeichnet, daß** ein Abtrennelement (8, 9) mehreren Leitungspfaden (7) zugeordnet ist, so daß bei Auslösen des Abtrennelements (8,9) aufgrund eines unzulässigen Betriebszustandes eines Schutzelements (6) die mehreren Leitungspfade (7) unterbrochen sind.

5. Überspannungsschutzgerät nach einem der Ansprüche 1 bis 4, **dadurch gekennzeichnet, daß** die einzelnen Abtrennelemente (8,9) als mit den zugeordneten Schutzelementen (6) thermische gekoppelte Temperatursicherungen ausgebildet sind.

6. Überspannungsschutzgerät nach einem der Ansprüche 1 bis 5, **dadurch gekennzeichnet, daß** im Geräteunterteil (2) und/oder im Geräteoberteil (3) mindestens ein Prüfabgriff (11), insbesondere eine Prüfbuchse, ausgebildet ist.

7. Überspannungsschutzgerät nach einem der Ansprüche 1 bis 6, **dadurch gekennzeichnet, daß** im Geräteunterteil (2) mindestens eine manuell bedienbare Trennstelle (12), insbesondere eine Messertrennstelle, ausgebildet ist.

8. Überspannungsschutzgerät nach einem der Ansprüche 1 bis 7, **dadurch gekennzeichnet, daß** zwischen dem Geräteunterteil (2) und dem Geräteoberteil (3) bzw. den Geräteoberteilen eine Kodierung ausgebildet ist,

9. Überspannungsschutzgerät nach einem der Ansprüche 1 bis 8, **dadurch gekennzeichnet, daß** das Geräteunterteil (2) oder das Geräteoberteil (3) eine Anzeige aufweist, die den korrekten Einbauzustand des Geräteoberteils (3) bzw. der Geräteoberteile im Geräteunterteil (2) signalisiert.

10. Überspannungsschutzgerät nach einem der Ansprüche 1 bis 9, **dadurch gekennzeichnet, daß** das Geräteoberteil (3) mindestens eine Anzeige aufweist, die den Betriebszustand des Schutzelements (6) bzw. der Schutzelemente signalisiert.

11. Überspannungsschutzgerät nach einem der Ansprüche 1 bis 10, **dadurch gekennzeichnet, daß** das Geräteunterteil (2) mindestens eine Erdungsklemme aufweist, die insbesondere über einen metallischen Montagefuß (13) direkt oder indirekt mit Erdpotential, insbesondere mit einer Tragschiene (14), verbunden ist.

12. Überspannungsschutzgerät nach einem der Ansprüche 1 bis 11, **dadurch gekennzeichnet, daß** das Geräteoberteil (3) eine insbesondere berührungslose erfaßbare Auslesemöglichkeit des Zustandes mindestens eines Schutzelements (6) und/oder mindestens eines Abtrennelements (8), insbesondere ein RFID-Tag aufweist.

## Claims

1. An overvoltage protection device for protection of electrical low-voltage installations, comprising a device lower part (2) and at least one device upper part (3), which can be plugged onto the device lower part (2), with the device lower part (2) having input and output terminals (4, 5) for electrical conductors and contact elements, which are connected to the input and output terminals (4, 5), and in particular are in the form of plug sockets, with the device upper part (3) having opposing contact elements, which correspond to the contact elements, and in particular are in the form of plug pins, and at least one protection element (6), in particular a varistor, which is connected between two opposing contact elements,
**characterized**
**in that** at least one line path (7) runs between two mutually associated input and output terminals (4, 5) over the device upper part (3) such that the line path (7) is interrupted when the device upper part (3) is not fitted, whereby a manual disconnection capability for the signal flow via the line path is possible, and
**in that** at least one disconnection element (8) is arranged in at least one line path (7) in the device upper part (3) such that, when the disconnection element (8) is tripped as a result of an impermissible operating state of the protection element (6), the corresponding line path (7) is also interrupted when the device upper part (3) is fitted.

2. Overvoltage protection device as claimed in claim 1, **characterized in that** all the line paths (7) between two mutually associated input and output terminals (5, 6) run over the device upper part (3), and **in that** at least one disconnection element (8) is in each case arranged in each line path (7) in the device upper part (3).

3. Overvoltage protection device as claimed in claim 1 or 2, **characterized in that** two or more disconnection elements (8, 9) are arranged in series with one another between at least two opposing contact elements in the device upper part (3) such that in each case one disconnection element (8, 9) is on a side of the output path (10) having the protection element (6).

4. Overvoltage protection device as claimed in one of claims 1 to 3, **characterized in that** one disconnection element (8, 9) is associated with a plurality of line paths (7) such that, when the disconnection element (8, 9) is tripped as the result of an impermissible operating state of one protection element (6), the plurality of line paths (7) are interrupted.

5. Overvoltage protection device as claimed in one of claims 1 to 4, **characterized in that** the individual disconnection elements (8, 9) are in the form of thermal fuses which are thermally coupled to the associated protection elements (6).

6. Overvoltage protection device as claimed in one of claims 1 to 5, **characterized in that** at least one test tap (11), in particular a test socket, is formed in the device lower part (2) and/or in the device upper part (3).

7. Overvoltage protection device as claimed in one of claims 1 to 6, **characterized in that** at least one disconnection point (12) which can be operated manually, in particular a blade disconnection point, is formed in the device lower part (2).

8. Overvoltage protection device as claimed in one of claims 1 to 7, **characterized in that** a coding is formed between the device lower part (2) and the device upper part (3) or the device upper parts.

9. Overvoltage protection device as claimed in one of claims 1 to 8, **characterized in that** the device lower part (2) or the device upper part (3) has an indication which signals that the device upper part (3) or the device upper parts is or are installed correctly in the device lower part (2).

10. Overvoltage protection device as claimed in one of claims 1 to 9, **characterized in that** the device upper part (3) has at least one indication which signals the operating state of the protection element (6) or of the protection elements.

11. Overvoltage protection device as claimed in one of claims 1 to 10, **characterized in that** the device lower part (2) has at least one grounding terminal which is connected directly or indirectly, in particular via a metallic mounting foot (13), to ground potential, in particular to a mounting rail (14).

12. Overvoltage protection device as claimed in one of claims 1 to 11, **characterized in that** the device upper part (3) has a capability to read the state of at least one protection element (6) and/or of at least one disconnection element (8), in particular an RFID tag, which in particular can be read without making contact.

## Revendications

1. Appareil de protection contre les surtensions destiné à protéger des installations électriques à basse tension, composé d'une partie inférieure de boîtier (2) et d'au moins une partie supérieure de boîtier (3) qui peut être emboîtée sur la partie inférieure de boîtier (2),
la partie inférieure de boîtier (2) présentant des bornes d'entrée et de sortie (4, 5) pour des conducteurs électriques et des éléments de contact reliés aux bornes d'entrée et de sortie (4, 5), notamment réalisés sous la forme de douilles d'enfichage,
la partie supérieure de boîtier (3) présentant des éléments de contact homologues, correspondant aux éléments de contact et notamment réalisés sous la forme de broches d'enfichage, et au moins un élément de protection (6), notamment une varistance, branché entre deux éléments de contact homologues,
**caractérisé**
**en ce qu'**au moins un chemin de liaison (7) entre deux bornes d'entrée et de sortie (4, 5) associées l'une à l'autre passe par la partie supérieure de boîtier (3), de sorte que lorsque la partie supérieure de boîtier (3) n'est pas emboîtée, le chemin de liaison (7) est interrompu, ce qui rend possible une fonction de séparation manuelle du flux de signal par le chemin de liaison, et
**en ce que** dans au moins un chemin de liaison (7) dans la partie supérieure de boîtier (3) est disposé au moins un élément de sectionnement (8) qui surveille l'état de fonctionnement d'un élément de protection (6) de telle sorte que lors du déclenchement de l'élément de sectionnement (8) en raison d'un état de fonctionnement non autorisé de l'élément de protection (6), le chemin de liaison (7) correspondant est également interrompu lorsque la partie supérieure de boîtier (3) est emboîtée.

2. Appareil de protection contre les surtensions selon la revendication 1, **caractérisé en ce que** tous les chemins de liaison (7) entre deux bornes d'entrée et de sortie (4, 5) associées l'une à l'autre passent par la partie supérieure de boîtier (3) et **en ce qu'**au moins un élément de sectionnement (8) est à chaque fois disposé dans chaque chemin de liaison (7) dans la partie supérieure de boîtier (3).

3. Appareil de protection contre les surtensions selon la revendication 1 ou 2, **caractérisé en ce que** deux éléments de sectionnement (8, 9) ou plus sont disposés en série l'un avec l'autre dans la partie supérieure de boîtier (3) entre au moins deux éléments de contact homologues de telle sorte qu'au moins un élément de sectionnement (8, 9) se trouve à chaque fois d'un côté du chemin de dérivation (10) qui présente l'élément de protection (6).

4. Appareil de protection contre les surtensions selon l'une des revendications 1 à 3, **caractérisé en ce que** plusieurs chemins de liaison (7) sont associés à un élément de sectionnement (8, 9), de sorte qu'en cas de déclenchement de l'élément de sectionnement (8, 9) en raison d'un état de fonctionnement non autorisé d'un élément de protection (6), les plusieurs chemins de liaison (7) sont interrompus.

5. Appareil de protection contre les surtensions selon l'une des revendications 1 à 4, **caractérisé en ce que** les éléments de sectionnement (8, 9) individuels sont réalisés sous la forme de protections thermiques couplées thermiquement avec les éléments de protection (6) associés.

6. Appareil de protection contre les surtensions selon l'une des revendications 1 à 5, **caractérisé en ce qu'**au moins une prise de contrôle (11), notamment une douille de contrôle, est formée dans la partie inférieure de boîtier (2) et/ou dans la partie supérieure de boîtier (3).

7. Appareil de protection contre les surtensions selon l'une des revendications 1 à 6, **caractérisé en ce qu'**au moins un point de sectionnement (12) à commande manuelle, notamment un point de sectionnement à lame, est formé dans la partie inférieure de boîtier (2).

8. Appareil de protection contre les surtensions selon l'une des revendications 1 à 7, **caractérisé en ce qu'**un détrompage est formé entre la partie inférieure de boîtier (2) et la partie supérieure de boîtier (3) ou les parties supérieures de boîtier.

9. Appareil de protection contre les surtensions selon l'une des revendications 1 à 8, **caractérisé en ce que** la partie inférieure de boîtier (2) ou la partie supérieure de boîtier (3) présente un indicateur qui signale l'état de montage correct de la partie supérieure de boîtier (3) ou des parties supérieures de boîtier dans la partie inférieure de boîtier (2).

10. Appareil de protection contre les surtensions selon l'une des revendications 1 à 9, **caractérisé en ce que** la partie supérieure de boîtier (3) présente au moins un indicateur qui signale l'état de fonctionnement de l'élément de protection (6) ou des éléments de protection.

11. Appareil de protection contre les surtensions selon l'une des revendications 1 à 10, **caractérisé en ce que** la partie inférieure de boîtier (2) présente au moins une borne de mise à la terre qui est reliée directement ou indirectement au potentiel de la terre, notamment à un rail porteur (14), notamment par le biais d'un pied de montage métallique (13).

12. Appareil de protection contre les surtensions selon l'une des revendications 1 à 11, **caractérisé en ce que** la partie supérieure de boîtier (3) présente une possibilité de lecture accessible notamment sans contact de l'état d'au moins un élément de protection (6) et/ou d'au moins un élément de sectionnement (8), notamment une étiquette RFID.
